# FASCICULE DE BREVET EUROPEEN

(11) **EP 2 332 004 B1**
(45) Date de publication et mention de la délivrance du brevet: **31.05.2017**
(21) Numéro de dépôt: 09755982.7
(22) Date de dépôt: 07.10.2009
(51) Int. Cl.: G02F 1/15

(54) **SYSTEME ELECTROACTIF TRANSPARENT**
TRANSPARENTES ELEKTROAKTIVES SYSTEM
TRANSPARENT ELECTROACTIVE SYSTEM

(30) Priorité: 09.10.2008 FR 0856837
(43) Date de publication de la demande: 15.06.2011
(73) Titulaire: Essilor International (Compagnie Générale d'Optique), 94220 Charenton-le-Pont (FR)
(72) Inventeur: DULUARD, Sandrine, F-94220 Charenton-le-Pont (FR); CANO, Jean-Paul, F-94220 Charenton-le-Pont (FR); BIVER, Claudine, F-94220 Charenton-le-Pont (FR)
(74) Mandataire: Cabinet Plasseraud
(86) Numéro de dépôt international: PCT/FR2009/051911
(87) Numéro de publication internationale: WO 2010/040954

(56) Documents cités:
- WO-A-2008/000607
- JP-A- S5 924 879
- JP-A- H11 316 396
- JP-A- S59 219 723
- US-A1- 2002 005 977

## Description

La présente invention concerne un système électroactif transparent.

Elle concerne plus particulièrement un tel système qui incorpore des substances électroactives ayant des potentiels d'oxydo-réduction qui sont différents. De telles substances, qui sont actives électrochimiquement, peuvent chacune être converties entre une forme oxydée et une forme réduite, en fonction d'un potentiel électrique créé à l'endroit de cette substance. Il peut s'agir de substances électrochromes, et on pourra se reporter à ce sujet au document suivant : P.M.S. Monk, R.J. Mortimer and D.R. Rosseinsky, Electrochromism and electrochromic devices, 2007, Cambridge University Press.

Il est connu de réaliser à partir de telles substances, des systèmes transparents dont les caractéristiques de transmission de la lumière peuvent être modifiées par une commande électrique. Pour cela, les substances électroactives sont choisies en fonction de leur potentiel électrique d'oxydoréduction, et d'une variation d'absorption lumineuse et/ou de couleur qu'elles présentent entre leurs formes oxydée et réduite. Ainsi, la transmission lumineuse du système et/ou sa couleur peut être modifiée par la commande électrique.

La commande électrique est une différence de potentiel électrique ou un courant électrique qui est imposé entre deux électrodes qui sont au contact d'un milieu contenant les substances électroactives. Ce milieu est un liquide et/ou un gel, pour que les substances électroactives puissent chacune diffuser ou migrer vers l'une des électrodes. Lorsqu'une première des substances arrive au contact de l'électrode qui possède le potentiel le plus élevé, elle est oxydée. Simultanément, une seconde substance qui arrive au contact de l'électrode qui possède le potentiel le plus bas est réduite. Les deux substances sont donc converties de façon inverse par rapport aux formes oxydées et réduites, et la variation globale de la transmission lumineuse et/ou de la couleur du système résulte des variations individuelles d'absorption et/ou de couleur de chaque substance entre ses formes oxydée et réduite.

Les deux électrodes sont transparentes. Elles peuvent être à base d'un oxyde d'indium dopé à l'étain, couramment désigné par ITO pour «indium-tin oxide» en anglais, ou à base d'oxyde d'étain dopé, par exemple avec du fluor (FTO pour « fluorine tin oxide »), à base d'une couche métallique suffisamment fine, ou d'une grille métallique invisible etc.

Les deux électrodes peuvent être disposées sur deux côtés opposés d'un volume qui renferme le milieu avec les substances électroactives. Mais dans une telle configuration du système, un même rayon lumineux qui est transmis à travers le système traverse l'une des électrodes, le milieu à substances électroactives, puis l'autre électrode. Les absorptions lumineuses résiduelles respectives des deux électrodes se cumulent donc, et entrainent une réduction de la transmission lumineuse du système. Or les matériaux couramment utilisés pour les électrodes ont des absorptions lumineuses qui sont perceptibles, et qui rendent le système trop sombre pour certaines applications.

Selon une configuration alternative possible des systèmes électroactifs, les deux électrodes peuvent être juxtaposées d'un même côté du milieu qui contient les substances électroactives. Mais les systèmes qui sont réalisés selon cette configuration alternative ne sont pas complètement transparents. Ils peuvent être diffusants ou diffractants à cause de l'écart d'indice entre le matériau qui constitue les électrodes et celui qui est présent dans les intervalles de séparation entre ces électrodes. De plus si la distance de séparation entre les deux électrodes est importante, l'intervalle de séparation entre celles-ci devient visible à cause des absorptions lumineuses différentes entre les matériaux qui constituent ces électrodes et ceux constituant l'intervalle de séparation.

A l'inverse, si la distance de séparation entre les deux électrodes est réduite, une bande apparaît entre celles-ci, dans laquelle les substances électroactives se neutralisent réciproquement. Une telle neutralisation provoque une décoloration progressive du système. En effet, les substances qui ont réagi sur l'une des deux électrodes diffusent ou migrent en direction de l'autre électrode, et réagissent avec les substances qui proviennent de cette dernière.

Le document US 2002/005977 décrit un système électroactif transparent, dans lequel les deux électrodes sont portées par une même paroi externe du système, sur un seul côté du volume qui renferme le milieu avec les substances électroactives.

Le document JP H11 316396 divulgue un dispositif électrochrome avec électrode et contre-électrode d'alimentation qui sont portées par une même des deux parois externes, et avec une couche isolante qui est intercalée entre les deux électrodes.

Un but de la présente invention est donc de fournir des systèmes électroactifs qui sont transparents, et qui ne présentent pas les inconvénients cités ci-dessus.

Pour cela, l'invention propose un système électroactif transparent comme défini dans la revendication 1 qui permet une vision distincte à travers ce système, et qui comprend :
- des parois externes qui définissent un volume fermé, le système étant transparent pour une direction de regard à travers les parois externes et le volume fermé entre deux côtés opposés,
- un liquide et/ou un gel qui est contenu dans le volume fermé ;
- deux électrodes transparentes, qui sont en contact avec le liquide ou gel selon des surfaces de transfert électronique, et qui sont destinées à être reliées respectivement à deux bornes d'une source d'alimentation électrique variable ;
- des premières et secondes substances électroactives, qui sont réparties dans le liquide ou gel, avec des potentiels électriques respectifs d'oxydo-réduction qui sont différents, certaines au moins parmi les premières et secondes substances électroactives ayant un effet optique variable entre une forme oxydée et une forme réduite de ces substances.

Dans le système de l'invention, les deux électrodes sont portées par une même des deux parois externes en étant juxtaposées parallèlement à cette paroi sur un même des côtés du volume fermé qui contient le liquide ou gel.

De plus, le système comprend en outre une barrière qui s'étend entre les deux électrodes, jusqu'à une hauteur h qui peut dépendre de la mobilité des substances, du champ électrique appliqué à celles-ci et de la géométrie du système. De façon générale, cette hauteur, mesurée à partir d'un niveau moyen des surfaces de transfert électronique des deux électrodes, est comprise entre 1 et 20 µm (micromètre).

Ainsi, un système selon l'invention est à la fois transparent et a une configuration selon laquelle les deux électrodes sont du même côté du volume qui contient les substances électroactives. Grâce à cette configuration, un même rayon lumineux ne traverse qu'une seule des deux électrodes, au lieu des deux. Le système peut alors présenter un niveau de transmission lumineuse qui est élevé.

Selon l'invention, une distance de séparation entre les électrodes est inférieure à 250 µm (micromètre). En outre, dans le but d'accroître la transparence du système, la forme de l'intervalle de séparation entre les électrodes est irrégulière de manière à moyenner dans l'espace la diffusion ou la diffraction qui provient de l'arrangement ordonné des électrodes. On entend par forme irrégulière une forme qui n'est pas rectiligne ni ne présente un motif répétitif constitué de moins de quatre segments rectilignes.

Dans le cadre de la présente description, on entend par transparence la possibilité de voir distinctement un objet ou une scène quelconque qui est située d'un côté du système, depuis l'autre côté à travers ce système. Autrement dit, la lumière qui traverse le système n'est pas affectée d'une manière qui pourrait brouiller la vision. En particulier, elle n'est pas diffusée ni diffractée, si bien qu'une source lumineuse ponctuelle qui est située à distance du système d'un premier côté de celui-ci est perçue comme un point à travers le système, depuis l'autre côté.

Par ailleurs, les deux électrodes sont suffisamment rapprochées l'une de l'autre parallèlement à la paroi commune qui les porte, pour que l'intervalle de séparation entre ces électrodes ne soit pas visible à l'oeil nu. De cette façon, un système dans lequel l'invention est mise en oeuvre est esthétique, et peut être utilisé pour de nombreuses applications, dans les domaines optique, ophtalmique et architectural notamment. De préférence, la distance de séparation entre les deux électrodes peut être est inférieure à 100 µm, voire comprise entre 1 et 40 µm, pour être encore moins visible.

Enfin, l'invention prévoit de disposer une barrière entre les deux électrodes, dans l'intervalle de séparation entre celles-ci, qui s'étend vers l'intérieur du volume contenant les substances électroactives. Grâce à cette barrière, d'une hauteur suffisante, une diffusion ou une migration des substances électroactives d'une électrode vers l'autre est inhibée ou réduite, de sorte qu'aucune neutralisation réciproque des substances électroactives réduites ou oxydées sur l'une ou l'autre des deux électrodes n'intervient significativement. Ainsi, le système ne présente pas de bande intermédiaire entre les deux électrodes, dans laquelle aucune activité optique variable ne pourrait être commandée volontairement. Autrement dit, la surface efficace du système, qui produit activement la variation de transmission lumineuse et/ou de couleur, est augmentée. Le système peut alors avoir un contraste apparent qui est supérieur. De préférence, la hauteur de la barrière peut être supérieure ou égale à 5 µm au delà du niveau moyen des surfaces de transfert électronique des deux électrodes. Une diffusion ou une migration résiduelle des substances électroactives entre les deux électrodes, susceptible d'aboutir à une neutralisation résiduelle des substances qui sont oxydées ou réduites aux électrodes, est alors encore plus réduite.

Un premier avantage de l'invention résulte de l'état de liquide ou de gel du milieu dans lequel sont dispersées les substances électroactives. Grâce à cet état, les substances électroactives peuvent diffuser ou migrer plus rapidement vers l'une ou l'autre des deux électrodes, de sorte que le système présente un temps de réponse court à une commande de commutation qui est appliquée en variant la tension délivrée par l'alimentation électrique. Cet état de liquide ou de gel du milieu permet aussi de simplifier le procédé de fabrication du système.

Un second avantage résulte de la configuration avec deux électrodes qui sont portées par la même paroi. Grâce à cette configuration, le système peut être réalisé plus simplement et avec moins d'étapes de procédé. En particulier, les deux électrodes peuvent être réalisées simultanément, avec des étapes de dépôt et de gravure qui sont communes. De plus, une exigence d'alignement des deux parois externes, l'une par rapport à l'autre lors d'un assemblage du système, est relâchée.

Selon un perfectionnement de l'invention, le système peut comprendre en outre un réseau de parois internes qui forme une partition du volume fermé en cellules juxtaposées parallèlement aux parois externes. L'une au moins des deux électrodes est alors en contact avec le liquide ou gel qui est contenu dans chaque cellule. Grâce à une telle partition du volume qui est compris entre les deux parois externes, le liquide ou gel qui contient les substances électroactives de l'ensemble du système ne peut s'écouler vers l'extérieur lorsque l'une des cellules devient ouverte. Seule la quantité du liquide ou gel qui est contenue dans la cellule ouverte peut alors fuir, de sorte que l'intégrité et la fonctionnalité du système sont conservées pour toutes les cellules autres que celle ouverte. En particulier, une telle partition permet de découper le système, sans qu'il soit endommagé ailleurs que sur le trajet de la découpe.

En outre, les parois internes peuvent avoir une fonction d'espaceurs, pour maintenir un écartement constant entre les parois externes. Lorsque le système est orienté verticalement, elles évitent notamment que les parois externes ne s'écartent en bas sous l'effet de la pression hydrostatique du liquide ou gel. Eventuellement, les parois internes évitent aussi qu'une décantation n'intervienne au sein du liquide ou gel.

Les parois internes peuvent avoir chacune une hauteur qui est supérieure ou égale à la hauteur de la barrière, de préférence comprise entre 5 µm et 25 µm, perpendiculairement aux parois externes. En effet, une telle épaisseur du milieu qui contient les substances électroactives permet d'obtenir un contraste important entre deux états extrêmes de commutation commandés par la variation de la tension électrique qui est appliquée entre les deux électrodes.

Selon un premier mode préféré de réalisation de l'invention, pour certaines au moins des cellules, les deux électrodes sont chacune en contact avec le liquide ou gel qui est contenu dans chaque cellule, avec une portion de la barrière qui est disposée dans la cellule entre les deux électrodes. Le liquide ou gel contenu dans la cellule contient alors à la fois les premières et les secondes substances électroactives. Chaque cellule est alors indépendante des autres, par rapport au fonctionnement du système lors d'une commutation commandée électriquement. Dans ce cas, elle peut être fermée hermétiquement pour l'isoler des autres cellules, et éviter ainsi qu'une altération chimique puisse se propager entre des cellules adjacentes.

Selon un second mode préféré de réalisation de l'invention, pour certaines au moins des cellules, une seule des deux électrodes est en contact avec le liquide ou gel qui est contenu dans chaque cellule. Une première de ces cellules qui est alimentée par l'une des électrodes est alors adjacente avec une seconde de ces cellules qui est alimentée par l'autre électrode. Le système comprend alors un pont ionique entre les deux cellules, qui assure un équilibre de charge électrique pour chaque cellule individuellement. La paroi interne qui sépare les deux cellules adjacentes alimentées chacune par une électrode distincte forme alors une portion de la barrière entre les deux électrodes prévue par l'invention. Dans ce cas, cette portion de barrière s'étend d'une paroi externe du système à l'autre, et possède une hauteur qui est encore supérieure à 3 µm, de préférence supérieure à 5 µm. Les deux électrodes ont des bords qui sont situés respectivement dans les deux cellules adjacentes, et qui sont encore distants de moins de 150 µm, de préférence de moins de 100 µm, de préférence encore avec une distance de séparation qui est comprise entre 5 et 40 µm.

Lorsqu'un contraste optique élevé est voulu entre des états distincts du système commandés par la tension électrique appliquée entre les deux électrodes, les premières et les secondes substances électroactives peuvent avoir chacune un effet optique qui est variable entre la forme oxydée et la forme réduite de ces substances.

En particulier, les premières et les secondes substances électroactives peuvent avoir des couleurs respectives dans l'une au moins des formes oxydées ou réduites, d'une façon qui est complémentaire par rapport à ces formes, de sorte que ces couleurs apparaissent simultanément lors d'un fonctionnement du système. Dans ce cas, les deux électrodes peuvent être avantageusement alternées avec un pas tel que les couleurs complémentaires ne puissent être distinguées à la distance d'observation du système. Une couleur moyenne est alors perçue uniformément.

Selon un autre perfectionnement de l'invention, le système peut comprendre en outre une bande d'un matériau isolant et transparent qui est disposée entre les deux électrodes. Cette bande et les électrodes peuvent posséder des épaisseurs optiques respectives qui sont adaptées pour produire des retards de phase respectifs qui sont égaux pour une onde de lumière visible se propageant perpendiculairement aux surfaces de transfert électronique des électrodes. De cette façon, une diffusion ou une diffraction lumineuse que pourraient produire éventuellement les bords des électrodes ou l'intervalle de séparation entre celles-ci est réduite ou supprimée. La transparence du système est ainsi accrue.

Alternativement et dans le même but d'accroître la transparence du système, le système peut comprendre aussi une quantité d'une substance absorbante pour une partie au moins de la lumière visible, qui est disposée entre les deux électrodes. Cette quantité de substance absorbante est portée de préférence par la même paroi externe que les électrodes, et du même côté que ces dernières.

Dans le même but d'accroître la transparence du système, la forme de la barrière peut être similaire à celle de l'intervalle de séparation entre les électrodes. La forme des parois pourra être avantageusement irrégulière de manière à diminuer d'autant plus la diffusion ou la diffraction causée par les parois.

Ces différents perfectionnements augmentent la transparence du système. Ils permettent aussi d'accroître l'intervalle de séparation entre les électrodes tout en conservant une transparence élevée.

Un système électroactif transparent selon l'invention peut être mis en oeuvre pour des applications très diverses. En particulier, il peut former un vitrage, par exemple un vitrage de façade de bâtiment, un verre de lunettes ophtalmiques, une visière de casque ou un verre de masque.

D'autres particularités et avantages de la présente invention apparaîtront dans la description ci-après d'exemples de réalisation non limitatifs, en référence aux dessins annexés, dans lesquels :
- les figures 1 et 2 sont des sections transversales de systèmes selon l'invention, correspondant respectivement à deux configurations distinctes ;
- les figures 3a et 3b sont des vues en plan de systèmes selon l'invention, montrant des contours d'électrodes possibles pour un système conforme à la figure 1 ;
- les figures 4a et 4b sont des vues en plan de systèmes selon l'invention, montrant des contours d'électrodes possibles pour un système conforme à la figure 2 ; et
- les figures 5a et 5b sont des vues grossies correspondant respectivement aux figures 1 et 2, qui montrent une réalisation alternative d'un perfectionnement de l'invention.

Pour raison de clarté de ces figures, les dimensions des éléments représentés ne correspondent ni à des dimensions réelles, ni à des rapports de dimensions réels. En outre, des références identiques qui sont indiquées sur des figures différentes désignent des éléments identiques ou qui ont des fonctions identiques.

De plus, les modes de réalisation de l'invention qui sont décrits en détail appartiennent au domaine ophtalmique. Mais il est entendu que ce domaine d'application n'est pris qu'à titre d'exemple, et que l'invention peut être mise en oeuvre de façon similaire pour des domaines d'application différents.

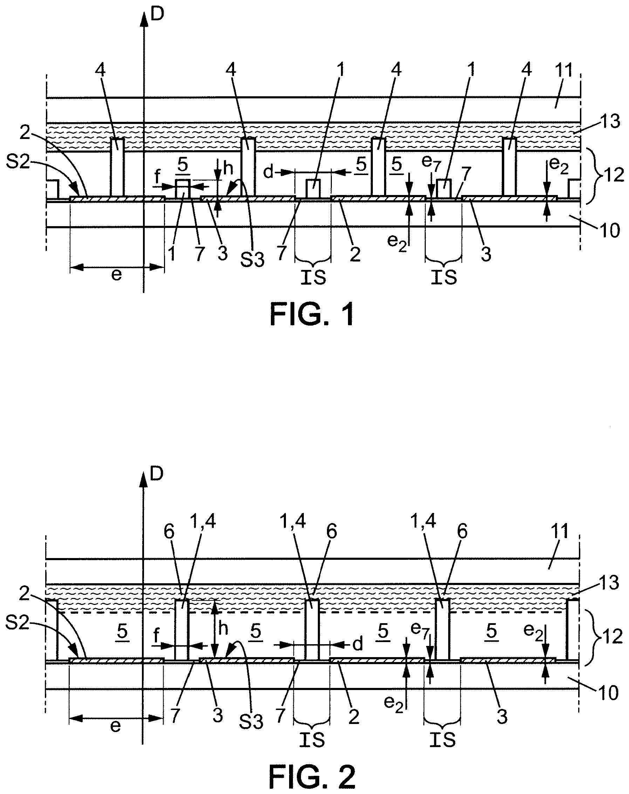

Conformément aux figures 1 et 2, deux parois externes 10 et 11 déterminent entre elles un volume fermé 12. Les parois 10 et 11 sont parallèles l'une à l'autre, planes ou courbes, et ont une extension surfacique quelconque. Par exemple, la paroi 10 peut être un film organique transparent, un verre de lunettes, ou une ébauche de verre de lunettes, et la paroi 11 peut être un film organique transparent de fermeture. Dans ce cas, la paroi 10 peut être constituée de tout matériau transparent organique ou minéral qui est couramment utilisé dans le domaine ophtalmique. La paroi 11 peut être en polyéthylène téréphtalate (PET), en copolymère d'oléfines cycliques (COC), en triacétate de cellulos (TAC) ou en polycarbonate (PC), par exemple. En outre, la paroi 11 peut être disposée sur une face concave du verre de lunettes qui constitue la paroi 10. L'épaisseur de la paroi 11 peut être adaptée au procédé qui est utilisé pour son assemblage avec le verre 10. Par exemple, elle peut être comprise entre 50 et 200 µm. De plus, les parois 10 et 11 peuvent chacune être des structures complexes. Notamment, elles peuvent comprendre chacune un élément de paroi de base et un ou plusieurs revêtements qui sont disposés sur celui-ci pour lui conférer des propriétés supplémentaires. A titre d'exemples non-limitatifs, ces revêtements peuvent avoir une fonction antireflet, une fonction antisalissure, une fonction de protection mécanique, une fonction de protection contre le rayonnement ultraviolet, une fonction de barrière aux gaz, etc.

Lorsque la paroi 10 ou la paroi 11 est un film organique transparent, l'empilement peut être reporté sur un substrat organique ou minéral. Dans ce cas, la paroi 10 ou alternativement la paroi 11 peuvent être placées en contact avec le substrat.

La paroi 10 porte deux électrodes séparées 2 et 3 sur sa face qui est orientée vers le volume 12. Ces électrodes peuvent être constituées de tout matériau conducteur électriquement, connu de l'Homme du métier. Par exemple, elles peuvent être en ITO. Les électrodes 2 et 3 peuvent avoir des motifs respectifs qui sont complémentaires par rapport à l'extension surfacique de la paroi 10, de façon à la recouvrir entièrement en dehors d'un intervalle de séparation IS entre ces électrodes. L'intervalle IS procure une isolation électrique des deux électrodes l'une par rapport à l'autre, sur la paroi 10. Par exemple, les électrodes 2 et 3 peuvent avoir des motifs respectifs en peigne qui sont imbriqués l'un dans l'autre.

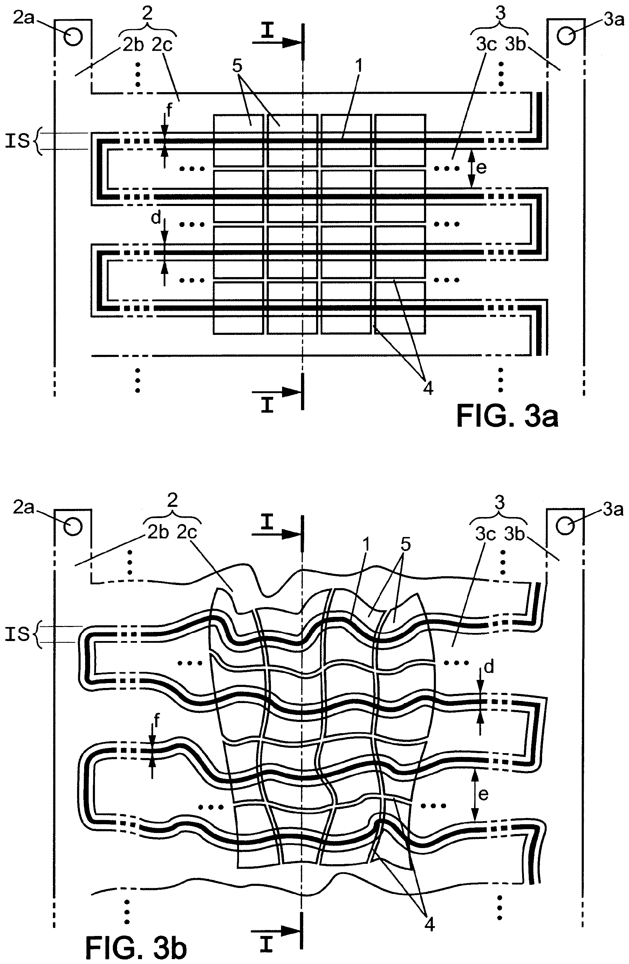

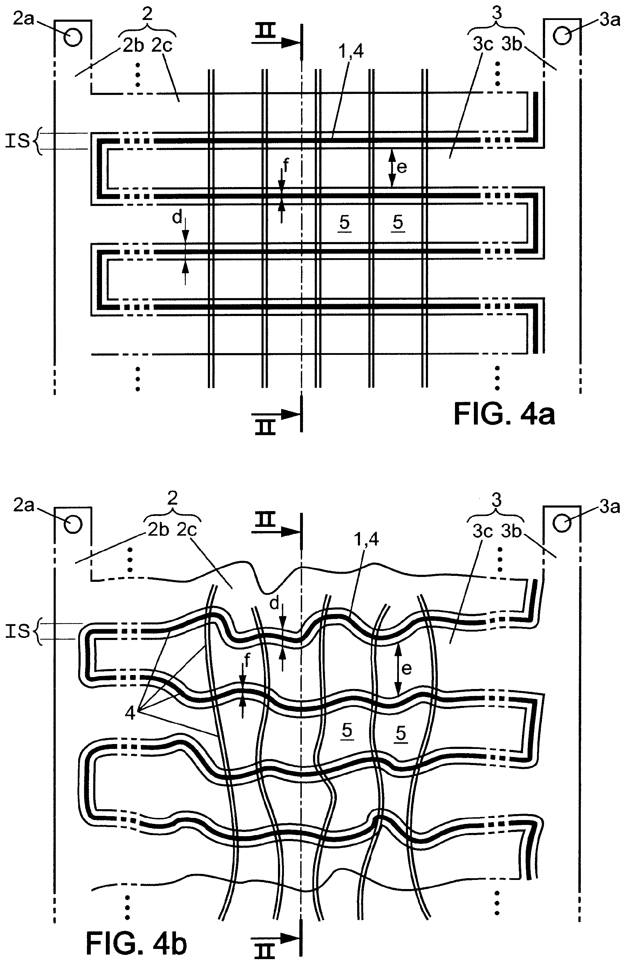

Les figures 3a/4a et 3b/4b montrent respectivement deux motifs possibles pour les électrodes 2 et 3. Sur ces figures, les références 2a et 3a désignent des bornes pour connecter respectivement les électrodes 2 et 3 à des bornes de sortie d'une alimentation électrique (non représentée) qui est destinée à commander le système et à l'alimenter en courant.

Le motif des figures 3a/4a est rectiligne. Chaque électrode 2, 3 comprend une branche de base, respectivement 2b et 3b, et des prolongements respectifs 2c et 3c qui sont raccordés aux branches de base correspondantes. Les prolongements 2c et 3c sont alternés selon une direction parallèle aux branches de base 2b et 3b, pour former une couverture complète de la paroi 10 en dehors de l'intervalle de séparation IS.

Le motif des figures 3b/4b est irrégulier. Autrement dit, les électrodes 2 et 3 ont des contours irréguliers, parallèlement aux parois externes 10 et 11. De tels contours irréguliers évitent qu'une quantité significative de lumière soit diffractée par les contours des électrodes dans des directions particulières. De cette façon, aucun scintillement du système n'apparaît, lorsque celui-ci est pivoté par rapport à un observateur externe ou lorsque l'oeil d'un porteur du verre de lunettes parcourt des directions de regard différentes à travers de verre. De préférence, les contours des électrodes 2 et 3 peuvent avoir des irrégularités bidimensionnelles, parallèlement aux parois 10 et 11. On entend par irrégularités bidimensionnelles des irrégularités qui concernent toutes les directions parallèles aux parois 10 et 11. La barrière 1 est alignée sur le motif irrégulier des électrodes. La forme des parois 4 pourra être avantageusement structurée irrégulièrement de manière à diminuer d'autant plus la diffusion ou la diffraction qui est causée par les parois. Des scintillements peuvent ainsi être réduits ou supprimés pour toutes les déviations que pourraient subir une lumière qui traverse le système.

La largeur d de l'intervalle IS de séparation entre les électrodes 2 et 3 peut être constant, compris entre 1 et 40 µm. Par exemple, il peut être sensiblement égal à 20 µm.

La largeur e des prolongements d'électrode 2c et 3c peut être comprise entre 10 et 5000 µm. Par exemple, elle peut être en moyenne de l'ordre de 50 à 500 µm.

Les électrodes 2 et 3 peuvent avoir une même épaisseur e₂, perpendiculairement à la paroi 10, par exemple de 0,3 µm.

Eventuellement, une bande 7 d'un matériau transparent peut être disposée dans l'intervalle IS entre les deux électrodes 2 et 3, avec une épaisseur perpendiculairement à la paroi 10 qui est accordée par rapport à celle des électrodes. De cette façon, les électrodes 2 et 3 avec la bande 7 peuvent produire un retard de phase qui est uniforme sur la paroi 10 pour des rayons lumineux qui traversent le système 10 au niveau de l'une ou l'autre des électrodes ou au niveau de l'intervalle IS. Sur les figures 1 et 2, D représente une direction de rayons lumineux qui traversent le système de l'invention entre deux côtés opposés de celui-ci. D peut être perpendiculaire ou non aux parois 10 et 11. La bande 7 permet de réduire une intensité d'une lumière qui serait diffusée ou diffractée par les bords des électrodes 2 et 3. Par exemple, la bande 7 peut être en oxyde de titane (TiO₂) ou en alumine (Al₂O₃), et l'épaisseur e₇ de la bande 7 peut être déterminée selon la formule Δn₇ x e₇ = Δn₂ x e₂, où Δn₇ et Δn₂ désignent respectivement les écarts d'indice de réfraction du matériau de la bande 7 et de celui des électrodes 2, 3 par rapport au milieu du volume 12.

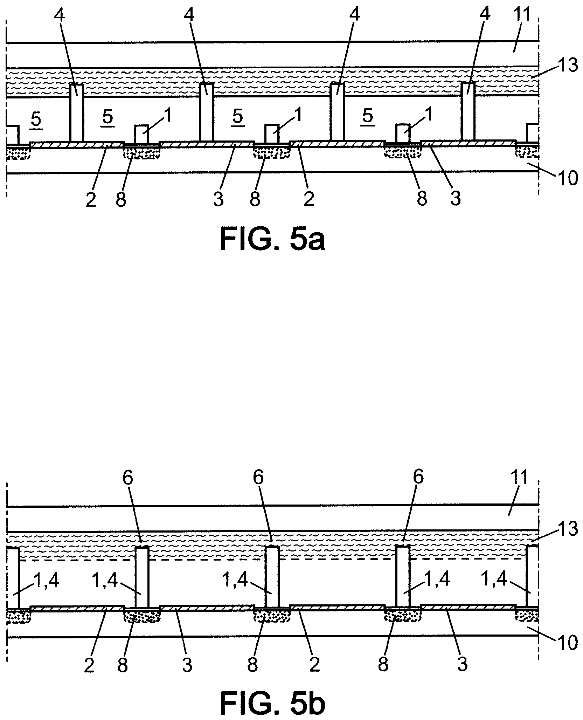

Alternativement, le système peut aussi comprendre une quantité de substance qui est absorbante pour une partie au moins de la lumière visible, et qui est disposée dans l'intervalle IS entre les électrodes 2 et 3. Une telle substance réduit aussi la lumière qui serait susceptible d'être diffusée par les bords des électrodes 2 et 3. Avantageusement, une telle substance absorbante peut être noire. Selon un mode économique d'introduction de la substance absorbante dans le système, ce peut être un ou des colorant(s) qui diffuse(nt) préférentiellement dans la paroi 10 entre les électrodes 2 et 3. Une telle quantité de substance absorbante est référencée 8 sur les figures 5a et 5b.

Des substances électroactives sont contenues dans le volume fermé 12 pour former un système électrochimique réversible avec les électrodes 2 et 3. De façon connue, ces substances doivent appartenir à au moins deux couples électrochimiques distincts, qui sont associés à des potentiels d'oxydation différents. Ainsi, des premières substances appartiennent à un premier couple électrochimique, et ont chacune une forme oxydée une forme réduite. Chacune de ces premières substances est convertie à partir de sa forme réduite dans sa forme oxydée lorsqu'elle entre en contact avec celle des électrodes 2 et 3 qui est connectée à la borne positive de l'alimentation électrique. Elle subit la conversion inverse lorsqu'elle entre en contact, dans sa forme initiale oxydée, avec l'électrode qui est reliée à la borne négative de l'alimentation. Lorsque les deux formes oxydée et réduite ont des pouvoirs d'absorption lumineuse ou des colorations qui sont différents, chacune de ces conversions provoque une variation de transmission lumineuse ou de couleur du système au niveau de l'électrode correspondante.

De façon similaire, des secondes substances appartiennent à un second couple électrochimique, qui ont aussi chacune une forme oxydée et une forme réduite. Le fonctionnement de ce second couple est identique à celui du premier. Lorsque la tension électrique qui est appliquée entre les électrodes 2 et 3 est supérieure à la différence entre les potentiels d'oxydation des deux couples, les substances oxydées du couple qui possède le potentiel d'oxydation le plus bas réagissent à celle des électrodes 2 ou 3 qui est connectée, à un instant donné, à la borne négative de l'alimentation électrique. Les substances réduites de l'autre couple réagissent à l'autre électrode. Le système produit ainsi la commutation optique qui est commandée par la tension délivrée par l'alimentation électrique.

Lorsque la tension qui est appliquée entre les électrodes 2 et 3 est annulée, les substances des deux couples réagissent entre elles et retrouvent spontanément leurs formes initiales respectives oxydées et réduites, de sorte que le système reprend son aspect optique initial. La commutation optique inverse est obtenue.

Les premières et secondes substances électroactives peuvent être choisies parmi les couples électrochimiques connus de l'Homme du métier. A titre d'exemples non limitatifs, ce peut être des substances électrochromes telles que des viologènes, des carbazoles, de composés à base de phénylène-diamine, des composés à base de quinone, des composés à base de naphtopyrane, etc. Elles peuvent être dispersées dans un liquide ou un gel qui remplit le volume 12, et qui assure que ces substances sont mobiles pour venir réagir électrochimiquement sur l'une ou l'autre des électrodes 2 et 3. Ce milieu de dispersion peut être un solvant commun aux formes oxydées et réduites des deux couples électrochimiques. Par exemple, lorsque les premières substances électroactives sont du perchlorate d'éthyl-viologène à 0,2 M et les secondes substances électroactives sont de la NNN'N' tétraméthylphénylènediamine à 0,2 M, le milieu de dispersion peut être à base de carbonate de propylène.

Les substances des deux couples électrochimiques peuvent avoir chacune un effet optique qui est variable entre leurs formes respectives oxydées et réduites. Dans ce cas, la commutation optique du système est la combinaison des variations respectives d'effet optique des deux couples électrochimiques, dans le sens de l'oxydation pour l'un des couples et dans le sens de la réduction pour l'autre. En particulier, les substances de l'un des couples peuvent être colorées pour l'une de leurs formes oxydée ou réduite, et les substances de l'autre couple peuvent être colorées pour l'autre forme oxydée ou réduite. Dans ce cas, ces couleurs apparaissent ou disparaissent simultanément, en fonction de la commande électrique qui est appliquée au système par les électrodes. Lorsqu'elles apparaissent simultanément, respectivement aux électrodes correspondantes, la couleur apparente du système peut paraître uniforme lorsque les électrodes sont imbriquées l'une dans l'autre avec un pas d'alternance entre deux électrodes qui est suffisamment fin. En particulier, le pas d'alternance des électrodes peut être sélectionné en fonction de la distance entre un observateur et le système. La couleur apparente est le mélange des couleurs réelles de chaque substance colorée.

Eventuellement, les substances des deux couples qui apparaissent et disparaissent simultanément aux électrodes respectives peuvent avoir des couleurs qui sont sensiblement identiques.

Alternativement, les premières ou les secondes substances électroactives, appartenant à l'un des couples, peuvent avoir un effet optique qui est variable entre leur forme oxydée et leur forme réduite, alors que les autres substances, qui appartiennent à l'autre couple, n'ont pas d'effet optique variable entre leur forme oxydée et leur forme réduite. Dans ce cas, celle des électrodes 2 ou 3 qui est dédiée à transférer des électrons aux substances qui n'ont pas d'effet optique variable présente une surface de transfert électronique plus petite que la surface de transfert électronique de l'autre électrode, cette dernière étant alors dédiée à échanger des électrons aux substances qui ont l'effet optique variable. Ainsi, la surface de la paroi 10 peut être utilisée de façon à obtenir un contraste optique de commutation qui est important, malgré l'absence d'effet optique variable pour l'un des deux couples.

La barrière qui est disposée entre les électrodes selon l'invention, est référencée 1 sur les figures. Elle s'étend dans le volume 12 entre les électrodes 2 et 3, à partir de la face de la paroi 10 qui est interne au système ou à partir de la bande 7 lorsque celle-ci est présente. La hauteur et l'épaisseur de la barrière 1 sont respectivement notées h et f. L'épaisseur f peut être supérieure ou égale à 0,1 µm, par exemple comprise entre 0.5 et 8 µm.

Les surfaces de transfert électronique respectives des électrodes 2 et 3 sont parallèles à la paroi 10. Elles sont notées respectivement S2 et S3 sur les figures 1 et 2. Le plus souvent, elles sont situées à un même niveau au dessus de la face de la paroi 10 qui porte les deux électrodes, correspondant à l'épaisseur e₂ des électrodes. Dans ce cas, la hauteur h de la barrière 1 est repérée à partir du niveau commun des surfaces de transfert électronique des deux électrodes 2 et 3. Dans le cas général, notamment si les surfaces de transfert électronique ne sont pas à un même niveau commun au dessus de la paroi 10, la hauteur h est mesurée à partir d'une moyenne des niveaux respectifs des surfaces de transfert électronique des électrodes.

La barrière 1 rallonge le parcours des substances électroactives au sein du liquide ou gel, entre les électrodes 2 et 3 et diminue leur électromigration. Grâce à ce rallongement, les substances de chaque couple qui ont réagi à l'une ou l'autre des deux électrodes ne parviendraient à se rencontrer qu'après une durée de diffusion ou de migration qui est très augmentée. Pratiquement, en fonction de la hauteur h de la barrière 1, cette durée peut être très supérieure à celle qui sépare des commandes successives de deux commutations inverses du système. Ainsi, la neutralisation réciproque des substances des deux couples qui ont été réduites ou oxydées aux électrodes respectives est inhibée. Le système ne présente donc aucune bande entre les deux électrodes, dont la coloration ne correspond pas à l'état commandé électriquement. En outre, une consommation du système en courant électrique est aussi réduite.

Par ailleurs, dans les modes de réalisation préférés de l'invention qui sont décrits ici, le volume 12 est divisé en cellules 5, par un réseau de parois internes 4. Les parois 4 s'étendent à l'intérieur du volume 12, à partir de la paroi externe 10 ou à partir des composants qui peuvent être portés par celle-ci. Notamment, les parois 4 peuvent être portées par l'une ou l'autre des électrodes 2 et 3, ou par la bande 7 lorsque celle-ci est présente dans le système. Les parois internes 4 peuvent avoir chacune une hauteur de 1 à 50 µm, et de préférence de 5 à 25 µm, perpendiculairement à la paroi 10, et une épaisseur de l'ordre de 0,5 µm. Le réseau des parois 4 forme une partition du volume 12, de sorte que le liquide ou gel qui contient les substances électroactives est réparti et enfermé dans les cellules 5. Une quantité appropriée du liquide ou gel, avec une composition contrôlée, est alors introduite soit de façon uniforme dans toutes les cellules 5 par laminage par exemple, soit individuellement dans chaque cellule 5, par exemple en utilisant une tête de projection de matière, du type tête à jet d'encre. Les cellules 5 sont ensuite fermées par la paroi externe 11, du côté opposé à la paroi 10. Pour cela, une couche 13 d'un matériau adhérent peut être disposée entre la paroi externe 11 et les sommets des parois internes 4. L'épaisseur de la couche 13 est choisie de façon à assurer une bonne adhésion. La couche 13 peut avoir une épaisseur de 8 à 15 µm par exemple, et être en polystyrène (PS), polyacrylonitrile (PAN), polyfluorure de vinylidène (PVdF), polyméthacrylate de méthyle (PMMA), polyuréthane (PU), etc.

La barrière 1, de même que les parois internes 4, peut être à base d'au moins un matériau organique, inorganique ou hybride. Ce matériau peut être déposé sur la paroi externe 10 notamment par embossage, sérigraphie ou par jet d'encre, par spin coating ou pulvérisation («spray» en anglais), suivi par une étape de gravure. Ce peut être, par exemple, de la silice (SiO₂) ou de l'alumine (Al₂O₃). Alternativement, la barrière 1 et les parois internes 4 peuvent être constituées à base d'une résine lithographique.

Le système est alors fabriqué en réalisant les étapes suivantes sur la paroi externe 10, dans l'ordre chronologique : formation des électrodes 2 et 3, formation éventuelle des bandes 7 ou 8, formation de la barrière 1 et des parois internes 4, et remplissage des cellules 5. Puis les parois 10 et 11 sont assemblées l'une avec l'autre pour fermer l'ensemble du système.

Selon deux configurations différentes d'un système selon l'invention, la barrière 1 peut être distincte des parois internes 4, ou confondue avec certaines des parois 4. Mais il est entendu que, d'une façon générale, la mise en oeuvre de la barrière 1 selon l'invention est indépendante de l'utilisation de parois internes 4 pour diviser le volume 12 en cellules juxtaposées.

La première configuration, selon laquelle la barrière 1 est distincte des parois internes 4, correspond aux figures 1, 3a, 3b et 5a. La hauteur h de la barrière 1 peut être, par exemple, 5 µm, et la hauteur des parois 4 peut être 20 µm. Dans cette première configuration, chaque cellule 5 contient à la fois une portion de l'électrode 2 et une portion de l'électrode 3, ainsi qu'une portion de la barrière 1 entre les deux portions d'électrode. Le liquide qui est contenu dans chaque cellule 5 contient à la fois des substances de chacun des deux couples électrochimiques. Ainsi, chaque cellule 5 est indépendante des autres, et toutes les cellules peuvent fonctionner en parallèle en réponse à la même tension électrique qui est appliquée entre les deux électrodes. Les cellules 5 peuvent alors être chacune fermées hermétiquement, de sorte qu'aucun passage de matière ne se produise entre des cellules adjacentes. Par exemple, la couche 13 peut être constituée d'un matériau sensible à la pression, couramment désigné par PSA pour «Pressure Sensitive Adhesive» en anglais, qui adhère à la fois à la paroi externe 11 et aux sommets des parois internes 4.

Dans la seconde configuration, la barrière 1 est confondue avec certaines des parois internes 4, conformément aux figures 2, 4a, 4b et 5b. Les parois 4 qui sont concernées constituent alors des portions de la barrière 1. Dans ce cas, la hauteur h de la barrière 1 est celle des parois 4. Dans cette seconde configuration, chaque cellule 5 ne contient qu'une seule portion d'électrode, qui appartient soit à l'électrode 2, soit à l'électrode 3. De plus, chaque cellule qui contient une portion de l'une des électrodes est adjacente à au moins une autre cellule qui contient une portion de l'autre électrode. Lors d'une commutation du système, les deux cellules fonctionnent de façon complémentaire comme une batterie électrique. Dans ces conditions, chaque cellule 5 peut contenir des substances d'un seul des deux couples électrochimiques, ou bien des deux, notamment en fonction des polarités électriques respectives qui peuvent être appliquées aux deux électrodes 2 et 3. Deux cellules adjacentes qui sont alimentées électriquement l'une par l'électrode 2 et l'autre par l'électrode 3 sont alors reliées électriquement entre elles par un pont ionique 6. Le fonctionnement électrique et la composition d'un tel pont ionique sont supposés connus de l'Homme du métier. Le pont ionique 6 peut être soit perméable à toutes les espèces électroactives et aux espèces ioniques de l'électrolyte, soit imperméable aux premières et aux secondes substances électroactives. Dans ce deuxième cas, les substances électroactives peuvent chacune être contenues de façon permanente dans l'une des cellules adjacentes. De cette façon, chaque cellule peut ne pas contenir de substances appartenant au couple électrochimique qui n'est pas activé par l'électrode qui l'alimente. Une économie de substances électroactives en résulte.

Selon une première possibilité, le pont ionique 6 peut être constitué par une couche d'un gel ou une membrane qui est disposée sur les sommets des parois internes 4, du côté opposé aux électrodes 2, 3. Une telle couche qui forme le pont ionique 6 a une épaisseur qui dépend notamment de la hauteur des parois internes 4. Cette épaisseur peut être de l'ordre de 10 µm, par exemple, perpendiculairement aux parois 10 et 11. Eventuellement, ce gel peut aussi constituer la couche 13 qui assure la cohésion du système en retenant les parois 10 et 11 l'une à l'autre.

Selon une seconde possibilité, la paroi interne 4 qui sépare deux cellules 5 alimentées l'une par l'électrode 2 et l'autre par l'électrode 3, peut constituer le pont ionique. Pour cela, cette paroi peut être poreuse et perméable à des ions, de façon à permettre un transfert de ceux-ci entre les deux cellules. Dans ce cas, le scellement en haut des parois 4 peut être hermétique, de sorte qu'il ne permet lui-même de passage à aucune substance électroactive ni à aucune espèce ionique de l'électrolyte.

Les deux possibilités du pont ionique 6 qui est réalisé en haut des parois 4 et du pont ionique qui est constitué par la paroi 4 peuvent être utilisées conjointement dans un même système.

La seconde configuration du système peut être particulièrement avantageuse lorsqu'au moins trois couples électrochimiques qui présentent des couleurs complémentaires, pour des formes oxydées ou réduites qui sont produites simultanément lors de commutations du système, sont associés à un groupe de cellules adjacentes. En effet, ce groupe de cellules apparaît alors macroscopiquement comme un élément de la surface du système qui commute entre un état de transmission lumineuse élevée et un état de transmission lumineuse faible, ces deux états pouvant avoir des couleurs neutres. Les dimensions de chaque groupe de cellules peuvent alors être sélectionnées en fonction de la distance entre un observateur et le système électroactif.

Dans les différents cas où le pont ionique est imperméable aux premières et secondes espèces électroactives, la recombinaison des espèces après coloration est complètement bloquée. Le système ainsi formé est bistable. La décoloration est obtenue par application d'un potentiel électrique ou d'un courant électrique opposé.

Il est entendu que l'invention peut être mise en oeuvre en introduisant des modifications du système par rapport aux modes de réalisation qui ont été décrits en détail ci-dessus, tout en conservant certains au moins des avantages cités. En particulier, les dimensions et les matériaux de certains éléments peuvent être adaptés à chaque application, et les motifs des électrodes qui sont représentés sur les figures 3a, 3b, 4a et 4b peuvent être modifiés.

En outre, l'invention peut être mise en oeuvre pour la réalisation de systèmes électroactifs autres que les systèmes électrochromes.

## Revendications

1. Système électroactif transparent, permettant une vision distincte à travers ledit système, et comprenant :
- des parois externes (10, 11) définissant un volume fermé (12), le système étant transparent pour une direction de regard (D) traversant les parois externes et ledit volume fermé entre deux côtés opposés ;
- un liquide et/ou un gel contenu dans le volume fermé (12) ;
- deux électrodes transparentes (2, 3), en contact avec ledit liquide ou gel selon des surfaces de transfert électronique, et destinées à être reliées respectivement à deux bornes d'une source d'alimentation électrique variable ;
- des premières et secondes substances électroactives réparties dans le liquide ou gel, avec des potentiels électriques respectifs d'oxydoréduction qui sont différents, certaines au moins parmi les premières et secondes substances électroactives ayant un effet optique variable entre une forme oxydée et une forme réduite des dites substances,
dans lequel les deux électrodes (2, 3) sont portées par une même (10) des deux parois externes en étant juxtaposées parallèlement à ladite paroi externe sur un même des côtés du volume fermé (12) contenant le liquide ou gel,
le système comprenant en outre une barrière (1) qui s'étend entre les deux électrodes (2, 3) jusqu'à une hauteur (h) comprise entre 1 et 20 µm vers l'intérieur du volume fermé, ladite hauteur étant mesurée à partir d'un niveau moyen des surfaces de transfert électronique des deux électrodes,
**caractérisé en ce qu'**une distance de séparation (d) entre les dites électrodes est inférieure à 250 µm, et **en ce que** les électrodes (2, 3) ont des contours irréguliers, parallèlement aux parois externes (10, 11).

2. Système selon la revendication 1, dans lequel la hauteur (h) de la barrière (1) est supérieure ou égale à 5 µm, au delà du niveau moyen des surfaces de transfert électronique des deux électrodes (2, 3).

3. Système selon l'une quelconque des revendications précédentes, dans lequel la distance (d) de séparation entre les deux électrodes (2, 3) est inférieure à 100 µm, de préférence comprise entre 1 et 40 µm.

4. Système selon l'une quelconque des revendications précédentes, comprenant en outre un réseau de parois internes (4) formant une partition du volume fermé (12) en cellules (5) juxtaposées parallèlement aux parois externes (10, 11), et dans lequel l'une au moins des deux électrodes (2, 3) est en contact avec le liquide ou gel contenu dans chaque cellule.

5. Système selon la revendication 4, dans lequel les parois internes (4) ont chacune une hauteur supérieure ou égale à la hauteur de la barrière (1), de préférence comprise entre 15 µm et 25 µm, perpendiculairement aux parois externes (10, 11).

6. Système selon la revendication 4 ou 5, dans lequel, pour certaines au moins des cellules (5), les deux électrodes (2, 3) sont chacune en contact avec le liquide ou gel contenu dans chaque cellule, avec une portion de la barrière (1) disposée dans ladite cellule entre les deux électrodes, et le liquide ou gel contenu dans ladite cellule contenant à la fois les premières et secondes substances électroactives.

7. Système selon la revendication 4 ou 5, dans lequel, pour certaines au moins des cellules (5), une seule des deux électrodes (2, 3) est en contact avec le liquide ou gel contenu dans chaque cellule, une première des dites cellules qui est alimentée par l'une des électrodes (2) étant adjacente avec une seconde des dites cellules qui est alimentée par l'autre électrode (3), avec un pont ionique (6) entre les deux cellules, et la paroi interne (4) séparant lesdites première et seconde cellules formant une portion de la barrière (1) entre les deux électrodes.

8. Système selon la revendication 7, dans lequel le pont ionique (6) est imperméable aux premières et secondes substances électroactives.

9. Système selon la revendication 7 ou 8, dans lequel le pont ionique (6) est constitué par une couche d'un gel ou une membrane disposée sur des sommets des parois internes (4), du côté opposé aux électrodes (2, 3).

10. Système selon l'une quelconque des revendications 1 à 9, dans lequel les premières et les secondes substances électroactives ont chacune un effet optique variable entre la forme oxydée et la forme réduite des dites substances.

11. Système selon la revendication 10, dans lequel les premières et les secondes substances électroactives ont des couleurs respectives dans l'une au moins des formes oxydées ou réduites, d'une façon complémentaire par rapport aux dites formes, de sorte que les dites couleurs apparaissent simultanément lors d'un fonctionnement du système.

12. Système selon la revendication 11, dans lequel les deux électrodes (2, 3) sont alternées avec un pas inférieur à 1 mm parallèlement à la paroi externe (10) portant lesdites deux électrodes.

13. Système selon l'une quelconque des revendications 1 à 9, dans lequel les premières ou les secondes substances électroactives ont un effet optique variable entre la forme oxydée et la forme réduite des dites substances, les autres des dites premières et secondes substances n'ayant pas d'effet optique variable entre la forme oxydée et la forme réduite des dites autres substances, et dans lequel l'une des électrodes (2, 3) dédiée à transférer des électrons à celles des substances qui n'ont pas d'effet optique variable présente une surface de transfert électronique plus petite que l'autre électrode (2, 3) dédiée à transférer des électrons à celles des substances qui ont l'effet optique variable.

14. Système selon l'une quelconque des revendications précédentes, dans lequel la barrière (1) est à base d'au moins un matériau organique, inorganique ou hybride, ou d'une résine lithographique.

15. Système selon l'une quelconque des revendications 1 à 14, comprenant en outre une bande (7) d'un matériau isolant et transparent disposée entre les deux électrodes (2, 3), des épaisseurs respectives des dites électrodes et de ladite bande étant adaptées pour produire des retards de phase respectifs qui sont égaux pour une onde de lumière visible se propageant perpendiculairement aux surfaces de transfert électronique des électrodes.

16. Système selon l'une quelconque des revendications 1 à 14, comprenant en outre une quantité (8) d'une substance absorbante pour une partie au moins de la lumière visible, disposée entre les deux électrodes (2, 3).

17. Système selon la revendication 16, dans lequel la substance absorbante est noire.

18. Système selon la revendication 16 ou 17, dans lequel la substance absorbante comprend au moins un colorant diffusé dans celle (10) des parois externes qui porte les électrodes (2, 3), du côté de et entre les dites électrodes.

19. Système selon l'une quelconque des revendications précédentes, dans lequel les contours des électrodes (2, 3) ont des irrégularités bidimensionnelles, parallèlement aux parois externes (10, 11).

20. Système selon l'une quelconque des revendications précédentes, formant un vitrage, un verre de lunettes ophtalmiques, une visière de casque ou un verre de masque.

## Patentansprüche

1. Transparentes elektroaktives System, das eine scharfe Sicht durch das System ermöglicht, und umfassend:
- Außenwände (10, 11), die ein geschlossenes Volumen (12) definieren, wobei das System für eine Blickrichtung (D) transparent ist, die durch die Außenwände und das geschlossene Volumen zwischen zwei gegenüberliegenden Seiten hindurchgeht;
- eine Flüssigkeit und/oder ein Gel, die/das in dem geschlossenen Volumen (12) enthalten ist;
- zwei transparente Elektroden (2, 3), die mit der Flüssigkeit oder dem Gel nach elektronischen Übertragungsflächen in Kontakt sind und dazu bestimmt sind, jeweils an zwei Klemmen einer variablen elektrischen Stromquelle angeschlossen zu werden;
- erste und zweite elektroaktive Substanzen, die in der Flüssigkeit oder dem Gel verteilt sind, mit jeweiligen elektrischen Potentialen der Oxidoreduktion, die verschieden sind, wobei mindestens einige unter den ersten und zweiten elektroaktiven Substanzen eine optische Wirkung, die zwischen einer oxidierten Form und einer reduzierten Form der Substanzen variabel ist, aufweisen,
wobei die zwei Elektroden (2, 3) von einer gleichen (10) der zwei Außenwände getragen sind, indem sie nebeneinander parallel zu der Außenwand auf einer gleichen der Seiten des geschlossenen Volumens (12), das die Flüssigkeit oder das Gel enthält, angeordnet sind,
wobei das System ferner eine Barriere (1) aufweist, die sich zwischen den zwei Elektroden (2, 3) bis zu einer Höhe (h), die zwischen 1 und 20 µm beträgt, zum Inneren des geschlossenen Volumens erstreckt, wobei die Höhe ausgehend von einer durchschnittlichen Höhe der elektronischen Übertragungsflächen der zwei Elektroden gemessen wird,
**dadurch gekennzeichnet, dass** ein Trennabstand (d) zwischen den Elektroden kleiner als 250 µm ist und dass die Elektroden (2, 3) unregelmäßige Konturen parallel zu den Außenwänden (10, 11) aufweisen.

2. System nach Anspruch 1, wobei die Höhe (h) der Barriere (1) größer als oder gleich 5 µm jenseits der durchschnittlichen Höhe der elektronischen Übertragungsflächen der zwei Elektroden (2, 3) ist.

3. System nach einem der vorhergehenden Ansprüche, wobei der Trennabstand (d) zwischen den zwei Elektroden (2, 3) kleiner als 100 µm ist und vorzugsweise zwischen 1 und 40 µm liegt.

4. System nach einem der vorhergehenden Ansprüche, ferner umfassend ein Netz von Innenwänden (4), das eine Teilung des geschlossenen Volumens (12) in Zellen (5) bildet, die nebeneinander parallel zu den Außenwänden (10, 11) angeordnet sind, und wobei mindestens eine der zwei Elektroden (2, 3) in Kontakt mit der Flüssigkeit oder dem Gel ist, die/das in jeder Zelle enthalten ist.

5. System nach Anspruch 4, wobei die Innenwände (4) jeweils eine Höhe, die größer als oder gleich der Höhe der Barriere (1) ist und vorzugsweise zwischen 15 µm und 25 µm liegt, senkrecht zu den Außenwänden (10, 11) aufweisen.

6. System nach Anspruch 4 oder 5, wobei für mindestens einige der Zellen (5) die zwei Elektroden (2, 3) jeweils mit der Flüssigkeit oder dem Gel, die/das in jeder Zelle enthalten ist, in Kontakt sind, wobei ein Abschnitt der Barriere (1) in der Zelle zwischen den zwei Elektroden angeordnet ist, und wobei die Flüssigkeit oder das Gel, die/das in der Zelle enthalten ist, gleichzeitig die ersten und zweiten elektroaktiven Substanzen enthält.

7. System nach Anspruch 4 oder 5, wobei für mindestens einige der Zellen (5) eine einzige der zwei Elektroden (2, 3) mit der Flüssigkeit oder dem Gel, die/das in jeder Zelle enthalten ist, in Kontakt ist, wobei eine erste der Zellen, die von einer der Elektroden (2) bestromt wird, mit einer zweiten der Zellen, die von der anderen Elektrode (3) bestromt wird, mit einer Ionenbrücke (6) zwischen den zwei Zellen benachbart angeordnet ist, und wobei die Innenwand (4), die die erste und zweite Zelle trennt, einen Abschnitt der Barriere (1) zwischen den zwei Elektroden bildet.

8. System nach Anspruch 7, wobei die Ionenbrücke (6) für die ersten und zweiten elektroaktiven Substanzen undurchlässig ist.

9. System nach Anspruch 7 oder 8, wobei die Ionenbrücke (6) aus einer Schicht eines Gels oder einer Membran gebildet ist, die auf Oberseiten der Innenwände (4) auf der Seite, die den Elektroden (2, 3) gegenüberliegt, angeordnet ist.

10. System nach einem der Ansprüche 1 bis 9, wobei die ersten und zweiten elektroaktiven Substanzen jeweils eine optische Wirkung aufweisen, die zwischen der oxidierten Form und der reduzierten Form der Substanzen variabel ist.

11. System nach Anspruch 10, wobei die ersten und zweiten elektroaktiven Substanzen Farben jeweils in mindestens einer der oxidierten Form und der reduzierten Form komplementär zu den Formen derart aufweisen, dass die Farben bei einem Funktionieren des Systems gleichzeitig erscheinen.

12. System nach Anspruch 11, wobei die zwei Elektroden (2, 3) mit einem Abstand von weniger als 1 mm parallel zu der Außenwand (10), die die zwei Elektroden trägt, abgewechselt sind.

13. System nach einem der Ansprüche 1 bis 9, wobei die ersten oder die zweiten elektroaktiven Substanzen eine optische Wirkung aufweisen, die zwischen der oxidierten Form und der reduzierten Form der Substanzen variabel ist, wobei die anderen der ersten und zweiten Substanzen keine optische Wirkung aufweisen, die zwischen der oxidierten Form und der reduzierten Form der anderen Substanzen variabel ist, und wobei eine der Elektroden (2, 3), die dazu bestimmt ist, Elektronen an jene der Substanzen zu übertragen, die keine variable optische Wirkung aufweisen, eine kleinere elektronische Übertragungsfläche als die andere Elektrode (2, 3) aufweist, die dazu bestimmt ist, Elektronen an jene der Substanzen zu übertragen, die die variable optische Wirkung aufweisen.

14. System nach einem der vorhergehenden Ansprüche, wobei die Barriere (1) auf Basis von mindestens einem organischen, anorganischen Material oder einem Hybridmaterial oder einem Lithographie-Harz ist.

15. System nach einem der Ansprüche 1 bis 14, ferner umfassend einen Streifen (7) eines isolierenden und transparenten Materials, der zwischen den zwei Elektroden (2, 3) angeordnet ist, wobei die jeweiligen Dicken der Elektroden und des Streifens geeignet sind, um jeweilige Phasenverzögerungen zu erzeugen, die für eine Welle des sichtbaren Lichts, die sich senkrecht zu den elektronischen Übertragungsflächen der Elektroden ausbreitet, gleich sind.

16. System nach einem der Ansprüche 1 bis 14, ferner umfassend eine Menge (8) einer absorbierenden Substanz für mindestens einen Teil des sichtbaren Lichts, die zwischen den zwei Elektroden (2, 3) angeordnet ist.

17. System nach Anspruch 16, wobei die absorbierende Substanz schwarz ist.

18. System nach Anspruch 16 oder 17, wobei die absorbierende Substanz mindestens einen Farbstoff aufweist, der in der Zelle (10) der Außenwände, die die Elektroden (2, 3) trägt, auf der Seite der und zwischen den Elektroden diffundiert ist.

19. System nach einem der vorhergehenden Ansprüche, wobei die Konturen der Elektroden (2, 3) zweidimensionale Ungleichmäßigkeiten parallel zu den Außenwänden (10, 11) aufweisen.

20. System nach einem der vorhergehenden Ansprüche, das eine Glasscheibe, ein Glas einer ophtalmischen Brille, ein Visier eines Helms oder ein Glas einer Maske bildet.

## Claims

1. Transparent electroactive system that can be clearly seen through, comprising:
- external walls (10, 11) defining a closed volume (12), the system being transparent for a line of sight (D) passing through the external walls and said volume enclosed between two opposite sides;
- a liquid and/or a gel contained in the closed volume (12);
- two transparent electrodes (2, 3), making contact with said liquid or gel on electron transfer surfaces, and intended to be respectively connected to two terminals of a variable power supply; and
- first and second electroactive substances distributed in the liquid or gel, with different respective redox potentials, at least some of the first and second electroactive substances being optically variable between an oxidized form and a reduced form of said substances,
in which the two electrodes (2, 3) are borne by just one (10) of the two external walls, being juxtaposed parallel to said external wall on just one side of the closed volume (12) containing the liquid or gel,
the system furthermore comprising a barrier (1) that extends, between the two electrodes (2, 3), to a height (h) of between 1 and 20 µm, towards the interior of the closed volume, said height being measured from a mean level of the electron transfer surfaces of the two electrodes,
**characterized in that** a separation distance (d) between said electrodes is less than 250 µm, and **in that** the electrodes (2, 3) have irregular contours, parallel to the external walls (10, 11).

2. System according to Claim 1, in which the height (h) of the barrier (1) is greater than or equal to 5 µm, beyond the mean level of the electron transfer surfaces of the two electrodes (2, 3).

3. System according to either one of the preceding claims, in which the distance (d) separating the two electrodes (2, 3) is less than 100 µm, preferably between 1 and 40 µm.

4. System according to any one of the preceding claims, furthermore comprising a network of internal walls (4) partitioning the closed volume (12) into cells (5) juxtaposed parallel to the external walls (10, 11), and in which at least one of the two electrodes (2, 3) makes contact with the liquid or gel contained in each cell.

5. System according to Claim 4, in which the internal walls (4) each have a height greater than or equal to the height of the barrier (1), preferably between 15 µm and 25 µm, perpendicular to the external walls (10, 11).

6. System according to Claim 4 or 5, in which, for at least some of the cells (5), the two electrodes (2, 3) each make contact with the liquid or gel contained in each cell, with a portion of the barrier (1) placed in said cell between the two electrodes, and the liquid or gel contained in said cell containing both the first and second electroactive substances.

7. System according to Claim 4 or 5, in which, for at least some of the cells (5), only one of the two electrodes (2, 3) makes contact with the liquid or gel contained in each cell, a first of said cells, which is powered by one of the electrodes (2), being adjacent a second of said cells, which is powered by the other electrode (3), with a salt bridge (6) between the two cells, and the internal wall (4), separating said first and second cells, forming a portion of the barrier (1) between the two electrodes.

8. System according to Claim 7, in which the salt bridge (6) is impermeable to the first and second electroactive substances.

9. System according to Claim 7 or 8, in which the salt bridge (6) consists of a film of a gel or a membrane placed on the tops of the internal walls (4), on the side opposite the electrodes (2, 3).

10. System according to any one of Claims 1 to 9, in which the first and second electroactive substances are each optically variable between the oxidized form and the reduced form of said substances.

11. System according to Claim 10, in which the first and second electroactive substances have respective colors, in at least one of the oxidized or reduced forms, which are complementary relative to said forms, so that said colors appear simultaneously when the system is operated.

12. System according to Claim 11, in which the two electrodes (2, 3) are alternated, with a pitch of less than 1 mm, parallel to the external wall (10) bearing said two electrodes.

13. System according to any one of Claims 1 to 9, in which the first or second electroactive substances are optically variable between the oxidized form and the reduced form of said substances, the other of said first and second substances not being optically variable between the oxidized form and the reduced form of said other substances, and in which one of the electrodes (2, 3), dedicated to transferring electrons to those of the substances that are not optically variable, has a smaller electron transfer surface than the other electrode (2, 3), dedicated to transferring electrons to those of the substances that are optically variable.

14. System according to any one of the preceding claims, in which the barrier (1) is based on at least one organic, inorganic or hybrid material, or on a photoresist.

15. System according to any one of Claims 1 to 14, furthermore comprising a strip (7), of a transparent and insulating material, placed between the two electrodes (2, 3), the respective thicknesses of said electrodes and of said strip being designed to produce respective phase delays, which are equal for a wave of visible light propagating at right angles to the electron transfer surfaces of the electrodes.

16. System according to any one of Claims 1 to 14, furthermore comprising an amount (8) of a substance that is absorbent for a part at least of the visible light, placed between the two electrodes (2, 3).

17. System according to Claim 16, in which the absorbent substance is black.

18. System according to Claim 16 or 17, in which the absorbent substance comprises at least one dye diffused in the external wall (10) which bears the electrodes (2, 3), on the side of and between said electrodes.

19. System according to any one of the preceding claims, in which the contours of the electrodes (2, 3) have two-dimensional irregularities, parallel to the external walls (10, 11).

20. System according to any one of the preceding claims, forming a glazing pane, an ophthalmic spectacles lens, a helmet visor or a mask lens.
